# EUROPÄISCHE PATENTANMELDUNG

(11) **EP 1 780 241 A1**
(43) Veröffentlichungstag der Anmeldung: **02.05.2007**
(21) Anmeldenummer: 05022595.2
(22) Anmeldetag: 17.10.2005
(51) Int. Cl.: C08L 77/00, C08K 3/34

(54) **Verwendung von Polyamid-Formmassen zur Herstellung von Formteilen mit reduzierter Oberflächenverkohlung**

(71) Anmelder: EMS-Chemie AG, 7013 Domat/Ems (CH)
(72) Erfinder: Stöppelmann, Georg, Dr.rer.nat., 7402 Bonaduz (CH); Kettl, Ralph, Dipl.-Ing., 7417 Paspels (CH); Hoffmann, Botho, Dr. rer.nat., 7013 Domat/Ems (CH); Ebert, Martina, Dr. rer.nat., Dipl.-Phys., 7013 Domat/Ems (CH); Hewel, Manfred, Dr. rer.nat., Dipl.Chem., 7013 Domat/Ems (CH)
(74) Vertreter: Becker Kurig Straus

(57) **Zusammenfassung**

Die vorliegende Erfindung betrifft Formteile mit reduzierter Oberflächenverkohlung und längerem Erhalt der mechanischen Eigenschaften aus Polyamiden mit Nanofüllstoffen, die mittels Spritzguss oder Extrusion, insbesondere durch Extrusionsblasformen, Coextrusionsblasformen oder sequenziellem Blasformen mit und ohne 3D-Schlauchmanipulation hergestellt werden können, sowie die Verwendung von Polyamid-Formmassen zur Herstellung von Formteilen mit reduzierter Oberflächenverkohlung der Formteile im späteren Langzeitgebrauch bei erhöhten Temperaturen.

## Beschreibung

Die vorliegende Erfindung betrifft eine neue Verwendung von Polyamid-Formmassen mit nanoskaligen Füllstoffen zur Herstellung von Formteilen. Die hergestellten Polyamid-Formteile zeigen vor allem im späteren Langzeitgebrauch bei erhöhten Temperaturen einen längeren Erhalt der mechanischen Eigenschaften und eine deutlich reduzierte Oberflächenverkohlung.

Die erfindungsgemäßen Formteile können insbesondere Formteile beliebiger Art sein, hergestellt aus Polyamid-Formmassen mit Nanofüllstoffen. Meist handelt es sich dabei um Spritzgussteile, Extrusionsformteile oder extrusionsblasgeformte Teile in allen Varianten. Ein bevorzugtes Beispiel für letzteres sind Luftführungsteile für Luftversorgungssysteme von Kraftfahrzeugen, insbesondere extrusionsblasgeformte Ladeluftrohre für Turbolader im Kfz-Bereich.

Erfindungsgemäß werden unter dem Oberbegriff "Polyamide" alle Homopolyamide und Copolyamide (letztere inklusive Polyamidelastomere wie z. B. Polyesteramide, Polyetheresteramide und Polyetheramide) sowie Mischungen (Blends) aus Homopolyamiden und/oder Copolyamiden verstanden.

Die erfindungsgemäßen Polyamid-Formmassen enthalten wenigstens 30 Gew.-% Polyamid, bevorzugt wenigstens 50 Gew.-% Polyamid. Es ist aber auch möglich, dass ein Copolymer mit Polyamidbausteinen, welches Polyester-, Polyether-, Polysiloxan-, Polycarbonat-, Polyacrylat-, Polymethacrylat- oder Polyolefinsegmente enthält, zusätzlich zu den genannten Polyamiden oder alleine in den Formmassen eingesetzt wird. Ein solches Copolymer enthält mindestens 20 Gew.-% Polyamidbausteine. In einer bevorzugten Ausführungsform enthält dieses Copolyamid mindestens 30 Gew.-% Polyamidbausteine, besonders bevorzugt mindestens 40 Gew.-% Polyamidbausteine.

Konventionelle metallische Werkstoffe bei Kraftfahrzeugen werden immer häufiger im Zuge der Gewichtsreduktion durch leichtere Werkstoffe, wie z.B. Kunststoffe ersetzt. Um ein ähnliches Niveau in den mechanischen Eigenschaften zu erzielen, werden die Kunststoffe in technischen Bauteilen, die mechanischen oder thermischen Belastungen ausgesetzt sind, meist durch Fasern oder mineralische Füllstoffe verstärkt.

Die besonderen Anwendungen im Kfz-Bereich und insbesondere im Motorenraum erfordern aber auch eine hohe Beständigkeit der eingesetzten Werkstoffe hinsichtlich ihrer mechanischen Eigenschaften gegenüber den auftretenden Temperaturen. Diese Anforderungen bestehen insbesondere auch als Langzeitanforderungen über die gesamte Benutzungszeit eines Fahrzeuges. Besonderes wichtig ist hier die Betriebsfestigkeit bei Temperaturen von über 135°C und Zeiträumen von über 500 Stunden, bevorzugt von über 1000 Stunden, ganz besonderes bevorzugt von über 3000 Stunden. Die üblicherweise eingesetzten Polyamide zeigen aber oftmals einen deutlichen Abfall sowohl in den mechanischen Eigenschaften als auch in ihrer Beständigkeit gegenüber Luftoxidation.

Die Verwendung von hitzestabilisiertem Polyamid für Anwendungen im Kfz-Bereich, insbesondere im Motorenbereich ist bekannt. Hier eignen sich Polyamide wie z.B. Polyamid 6 und Polyamid 66. Diese Polyamide werden aber oftmals modifiziert, d.h. hitzestabilisiert, elastomermodifiziert und sie werden damit besonders schlagzäh, hydrolysebeständig oder zeigen eine reduzierte Wärmealterung (R. Zimnohl, Kunststoffe 88 (1988) 5, Seite 96-694, Karl Hansa Verlag, München).

Die Verarbeitung von Polyamid-Formmassen zu Formteilen erfolgt üblicherweise über Spritzgießmaschinen, Extrusionsanlagen oder auch Blasformanlagen. Dem Fachmann sind natürlich auch Sonderverfahren wie 2-Komponenten-Spritzguss, Spritzprägen, etc. oder Ein- und Mehrschicht-Extrusion (Coextrusion) bekannt. Eine Übersicht darüber gibt z.B. das Buch von W. Michaeli: "Einführung in die Kunststoffverarbeitung", 4. Auflage, Carl Hanser Verlag, München 1999.

Formteile können unter anderem als Hohlkörper ausgebildet sein. Die Herstellung von Hohlkörpern aus Thermoplasten geschieht heute in großem Maße durch Extrusionsblasverfahren bzw. den in diesem Verfahren zugeordneten Sonderverfahren. Die Palette an hergestellten Produkten umfasst neben den gängigen Hohlkörpern eine Vielzahl technischer Formteile, z.B. für Anwendungen im Bereich der Automobilindustrie, wie Kraftstoffbehälter, Luftführungskanäle, Ansaugrohre bzw. Teile von Ansaugrohren oder Saugmodulen etc. In verstärktem Maße lassen sich mit den neueren 3D-Blasformverfahren, wie z.B. 3D-Schlauchmanipulation, 3D-Saug-Blasverfahren jegliche erdenklich Form von Rohren oder Schläuchen für druckführende oder drucklose Medien herstellen.

Das Prinzip des Extrusionsblasformens ist seit langem bekannt und besteht darin, dass ein extrudierter Schmelzeschlauch von einer meist zweiteiligen, gekühlten Hohlform aufgenommen und mit Hilfe von Druckluft zum fertigen Hohlkörper aufgeblasen wird. In den meisten Fällen tritt der im Ringspalt eines Querspritzkopfes erzeugte Schlauch senkrecht nach unten aus. Sobald dieser Vorformling die erforderlich Länge erreicht hat, werden die Formhälften geschlossen. Die Schneidkanten der Formen erfassen den Schlauch, verschweißen ihn und quetschen zugleich die nach oben und unten überstehenden Reste ab.

Für die eingesetzten Rohstoffe beim Blasformen ergeben sich u.a. folgende Forderungen:

Hohe Schmelzezähigkeit bzw. -festigkeit (hohe Viskosität): Diese Forderung resultiert aus der nötigen Schlauchstandfestigkeit, im Folgenden auch Schmelzefestigkeit genannt. Selbst bei Einsatz von Schmelzespeichern und niedrigen Verarbeitungstemperaturen können längere Vorformlinge produktionssicher und reproduzierbar nur aus Produkten mit entsprechend hoher Schlauchstandfestigkeit hergestellt werden. Allerdings stellt sich das Problem des Auslängens des Vorformlings unter dem Eigengewicht des extrudierten Schlauchs. Abgesehen von der Fertigung sehr kleiner Blaskörper scheiden daher unmodifizierte Polyamide mit mittlerer und normaler Schmelzeviskosität, also Produkte mit einer relativen Viskosität ηᵣₑₗ <2,3 (gemessen an einer 1 gew.-%igen Polyamid 6-Lösung in H₂SO₄ bei 20°C) für das Extrusions-Blasverfahren aus. Beim Blasen von Hohlkörpern, deren Volumen etwa 0,5 1 übersteigt, ist man an die Verwendung von außerordentlich hochviskosen Einstellungen (ηᵣₑₗ>4,0; gemessen an einer 1 gew.-%igen Polyamid 6-Lösung in H₂SO₄ bei 20°C) gebunden. Daher sind nur die hochmolekularen, die verzweigten oder teilvernetzte Polyamide als Rohstoffe für das Blasverfahren geeignet.

Hohe thermische Stabilität: Gründe hierfür sind die recht lange Verweilzeit des Materials bei hohen Temperaturen im Schlauchkopf sowie die Tatsache, dass die Vorformlingoberfläche während des Extrusions- und Aufblasvorgangs dem oxidativen Angriff durch Luftsauerstoff ausgesetzt ist, sowie später vor allem der Einsatz der Formteile bei erhöhter Temperatur, z.B. unter der Motorhaube in Automobilen.

Gute Schmelzedehnfähigkeit: Diese bestimmt im Wesentlichen das erreichbare Aufblasverhältnis und die Wanddickenverteilung.

Für gewisse Anwendungen werden manchmal auch Formteile verlangt, die zonenweise unterschiedliche Materialeigenschaften haben. Anwendungsgebiete für Formteile mit alternierenden Eigenschaftskombinationen sind z.B. der Automobil- und Maschinenbau. So können in einem Rohr, beispielsweise in einem Luftladerohr, für einen Kraftfahrzeug-Turbodieselmotor Dämpfungs- und Wärmeausdehnungssegmente untergebracht werden. Diese Ladeluftrohre können durch 3D-Extrusion und anschließendem Blasformen hergestellt werden. Dabei können Blasformteile mit flexiblen Endzonen und hartem Mittelteil hergestellt werden. Derartige Luftansaugrohre oder Luftführungsrohre erfordern für eine gute Montage und Abdichtung der Enden einerseits, und eine ausreichenden Stabilität gegen Unter- und Überdruck im Mittelteil andererseits, eine Weich-Hart-Kombination.

Weiterhin werden an Luftladerohre für Turbomotoren erhöhte Anforderungen bezüglich Dauergebrauchstemperatur gestellt. Bislang werden hier Metallrohre (Aluminium) eingesetzt. Es besteht daher ein Bedarf an Polyamid-Formmassen mit erhöhter thermischer und mechanischer Belastbarkeit, die für die Herstellung von Kunststoff-Luftladerohren eingesetzt werden können. Die thermooxidative Beständigkeit der eingesetzten Kunststoffe ist für Anwendungen im Motorraum ein wichtiger Punkt, insbesondere sollte die Oberfläche der Polyamid-Formteile bei höheren Einsatztemperaturen (in der Regel 135°C bis über 200°C; Einsatzdauer von über 500 Stunden) nicht verkohlen.

WO 2004/099316 A1 (Domo Caproleuna GmbH) beschreibt Polymer-Nanocomposite-Blends aus mindestens zwei Polymeren und nanodispers delaminierten Schichtsilikaten. Die Polymer-Nanocomposite-Blends enthalten Polyamid und Polypropylen. Nachteilig ist bei der Verwendung dieser Formmassen aus Polyamid und Polypropylen zur Herstellung von Formteilen die vergleichsweise geringe Wärmeformbeständigkeit.

In WO 02/079301 A2 (Eikos, Inc.) werden hochtemperaturbeständige Polymer-Nanocomposite-Materialien beschrieben. Die verbesserte Temperaturbeständigkeit wird durch Behandlung der Phyllosilikate mit einem Nitril-haltigen Monomer, bevorzugt Phthalonitril erreicht.

In US 6,632,868 (Amcol) werden Nanocomposite-Konzentrate beschrieben, wobei als bevorzugte Polymere Polyolefine wie Polypropylen eingesetzt werden. Durch das Masterbatch-Verfahren soll ein geringerer Abbau des Polymers bei der Herstellung erzielt werden.

In WO 2005/003224 (Imerys Minerals Ltd.) werden flammgeschützte Formmassen mit Tonmineralien beschrieben. Durch Zugabe eines aminmodifizierten Tonminerals kann die Flammbeständigkeit von Formteilen aus entsprechenden Formmassen erhöht werden.

In WO 2005/056913 A1 (Huntsman) werden polymere Formmassen mit einem durch Wärmeeinwirkung expandierbaren Füllstoff, beispielsweise Grafit und einem Nanofüllstoff, wie z.B. Phyllosilikate beschrieben.

WO 2004/039916 A1 (Commonwealth Scientific and Industrial Research Organization) beschreibt flammgeschützte Formmassen.

In EP 1 394 197 A1 (EMS-Chemie AG) werden hochviskose Formmassen mit nanoskaligen Füllstoffen beschrieben, die eine erhöhte Schmelzefestigkeit sowie ein vorteilhaftes ausgeglichenes mechanisches Eigenschaftsprofil, auch bei erhöhter Temperatur, aufweisen. Die Formmassen werden zur Herstellung von Formkörpem, Hohlkörpern, Halbzeugen, Platten und Rohren eingesetzt.

WO 01/85835 A1 (Bayer AG) beschreibt Polyamid-Formmassen mit Verstärkungsstoffen und nanoskaligen Schichtsilikaten, die verbessertes Wärmealterungsverhalten aufweisen. Wärmealterung bedeutet hier das Verhalten gegenüber flüssigen Kühlmedien, insbesondere einem Glykol/Wassergemisch bei 130°C (vgl. WO 01/85835 A1, Seite 1, Zeilen 22-25, und Seite 11, Zeilen 21-25), wobei die Schlagzähigkeit untersucht wurde.

EP 1 359 196 A1 (Rehau AG & Co.) beschreibt schichtsilikatverstärkte Polyamid-Zusammensetzungen, die eine hohe Wärmeformbeständigkeit in Verbindung mit hoher Steifigkeit und hoher Schlagzähigkeit aufweisen. Die Formmassen werden zur Herstellung von Formteilen oder Halbzeugen für die Elektroindustrie eingesetzt.

EP 1 198 520 B1 (Solvay Advanced Polymers, LLC) beschreibt Verfahren zur Verringerung der Bildung von Formablagerungen während des Formens von Polyamiden und deren Zusammensetzungen.

In der EP 1 245 417 A2 (Behr GmbH) wird beschrieben, dass die thermischen Anforderungen an Wärmeübertrager aus Polyamid durch eine Oxidationsschutzbeschichtung oder einen Oxidationsschutzlack erreicht werden können. Hierfür ist ein zusätzlicher Behandlungsschritt des Fertigteils erforderlich (Oberflächenbeschichtung).

Aufgabe der vorliegenden Erfindung ist es daher, Kunststoffmaterialien als Ersatz für andere Werkstoffe für bestimmte Einsatzzwecke, z.B. im Motorenraum von Kraftfahrzeugen zu finden, die auch bei Temperaturen über 135°C eine gute Wärmeformbeständigkeit, Wärmealterungsbeständigkeit gegenüber Luftoxidation, hohe Dauergebrauchstemperatur, hohe Chemikalienresistenz aufweisen und auch hinsichtlich der mechanischen Eigenschaften nach verlängerten Einsatzzeiten ein ausgeglichenes mechanisches Eigenschaftsprofil aufweisen bzw. einen Erhalt der mechanischen Eigenschaften auch bei hohen Einsatztemperaturen und langen Einsatzdauern zeigen.

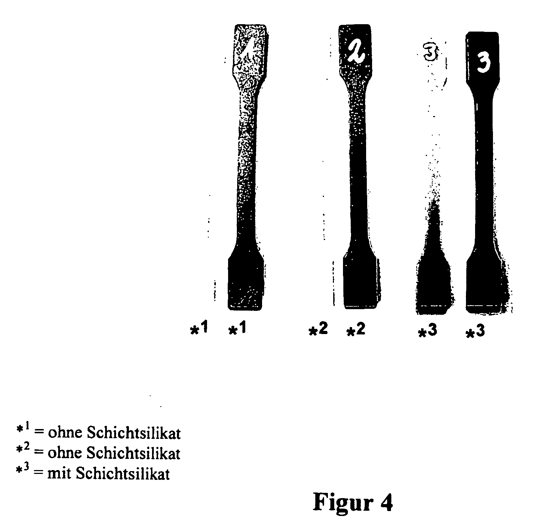

Überraschenderweise hat es sich erfindungsgemäß gezeigt, dass durch Einarbeitung von nanoskaligen Füllstoffen in Polyamid-Formmassen, d.h. von Füllstoffen, die in mindestens einer Dimension kleiner als 500 nm sind, bei den aus diesen Formmassen hergestellten entsprechenden Formteilen ein längerer Erhalt der mechanischen Eigenschaften und eine deutlich reduzierte Oberflächenverkohlung bei der Verwendung unter Einsatztemperaturen in Luft von über 135°C auftritt. Bei diesen Temperaturen, d.h. bei Temperaturen über 135°C, insbesondere bei Temperaturen von über 150°C, bevorzugt von über 200°C kommt es offenbar durch die eingearbeiteten Nanofüllstoffe zu einer Oberflächenpassivierung gegenüber Luftoxidation, die bei einer längeren Einsatzdauer, d.h. vor allem bei Gebrauch der Fertigteile in heißer Umgebung, deutlich zum Tragen kommt. Ein längerer Erhalt der mechanischen Eigenschaften (Reißdehnung und/oder Reißfestigkeit) bedeutet im Rahmen der vorliegenden Erfindung einen Zeitraum von über 500 Stunden, bevorzugt von über 1000 Stunden, ganz besonders bevorzugt von 3000 Stunden und betrifft daher Langzeitanforderungen über die gesamte Benutzungszeit eines Fahrzeuges. Durch Oberflächenpassivierung und damit verbundenen geringeren Anteil an Mikrorissen kann die Dauerfestigkeit bei dynamischer Belastung verbessert werden (siehe Figur 4, Stab Nr. 3).

Die vorliegende Erfindung beruht daher auf der überraschenden Feststellung, dass Prüfkörper, die man als Formmassen gemäß der Rezeptur gemäß Anspruch 1 herstellt, bei Hitzelagerung bzw. Hitzealterung deutlich weniger oder praktisch keine Verkohlung an der Oberfläche zeigen, im Vergleich zu Teilen aus gleichen Polyamiden, die keine Nanofüllstoffe enthalten. Es wurde festgestellt, dass bei den erfindungsgemäßen Formteilen auf der Oberfläche keine schwarzen Rückstände von Kohlenstoff, der sich sonst bei Lagerung der Teile bei über 135°C nach über 500 Stunden durch thermooxidativen Abbau bildet, festzustellen sind. Durch Oberflächenpassivierung und damit verbundenen geringeren Anteil an Mikrorissen kann die Dauerfestigkeit bei dynamischer Belastung verbessert werden (Figur 4, Stab Nr. 3).

Dies ist umso erstaunlicher angesichts des Umstandes, das der Fachmann von der Nanocomposites-Tagung 2005 wusste, dass der Zusatz von Nanofüllstoffen die Polymerstabilität beeinträchtigt (vgl. Vortrag von Herrn Dr. H. Wermter: "How to improve long-term performance of nanocomposites", Brussels Belgium, March 9th - 10th 2005).

Durch die erfindungsgemäß eingesetzten Formulierungen wird der thermooxidative Abbauprozess an der Oberfläche stark unterbunden; daher nehmen bei Hitzelagerung auch die mechanischen Eigenschaften, wie z.B. die Reißdehnung und/oder Reißfestigkeit (gemessen an 4-mm-Stäben nach ISO 527) deutlich weniger ab und bleiben länger erhalten. Die Erfinder haben festgestellt, dass diese Feststellung in der Regel für alle beanspruchten Polyamid-Formmassen gilt. Nach oben hin ist der Temperatureinsatzbereich im Prinzip nur durch den Schmelzpunkt des entsprechenden Polyamids begrenzt.

Die vorliegende Erfindung betrifft daher eine neue Verwendung von Formmassen, basierend auf thermoplastischen Polymeren, ausgewählt aus der Gruppe der Polyamide, enthaltend nanoskalige Füllstoffe, die in mindestens einer Dimension kleiner als 500 nm sind, in einer Menge von 0,5 bis 15 Gew.-%, bezogen auf das Gesamtgewicht der Formmasse, und gegebenenfalls weitere Zusatzstoffe, zur Herstellung von Formteilen mit längerem Erhalt der mechanischen Eigenschaften und mit deutlich reduzierter Oberflächenverkohlung beim Einsatz der Formteile unter auftretenden Anwendungstemperaturen (Luft) von über 135°C im Vergleich zu Formteilen aus gleichen Polyamiden, die keine nanoskaligen Füllstoffe enthalten.

In den Unteransprüchen sind vorteilhafte Ausführungsformen der Erfindung enthalten.

Die erfindungsgemäßen Formmassen können aber auch weitere Zusatzstoffe wie z.B. Verstärkungsstoffe (ausgenommen nanoskalige Schichtsilikate), insbesondere faserförmige Füllmaterialien in Mengen bis zu 65 Gew.-%, bevorzugt bis zu 30 Gew.-%, enthalten.

Die erfindungsgemäß eingesetzten Polyamid-Formmassen sind insbesondere hochviskos, d.h. sie weisen eine relative Viskosität, gemessen an einer 1,0 Gew-%igen Lösung in Schwefelsäure bei 20 °C, von 2,3 bis 4,0, insbesondere 2,6 bis 3,8 auf.

Die erfindungsgemäß eingesetzten Formmassen auf Basis von thermoplastischen Polymeren aus der Gruppe der Polyamide enthalten nanoskalige Füllstoffe in einer Menge von 0,5 bis 15 Gew.-%, insbesondere einer Menge von 2 bis 10 Gew.-%, ganz besonders bevorzugt in einer Menge von 2 bis 7 Gew.-%, bezogen auf das Gesamtgewicht der Formmasse, und gegebenenfalls weitere übliche, dem Fachmann bekannte Zusatzstoffe.

Die Verarbeitung der erfindungsgemäßen Formmassen zu Formteilen erfolgt üblicherweise über Spritzgussmaschinen oder auch Extrusions- und Blasformanlagen. Bevorzugte Formteile sind daher Spritzgussteile und Extrusionsteile. Spezielle Extrusionsteile sind Luftführungsteile, die in der Regel durch Extrusionsblasformen hergestellt werden.

Falls die erfindungsgemäß eingesetzten Formmassen zum Extrusionsblasformen verwendet werden, weisen sie bevorzugt eine um mindestens 30 % höhere Schmelzefestigkeit als gleiche Formmassen auf, welche anstelle der nanoskaligen Füllstoffe lediglich übliche mineralische Füllstoffe, wie z.B. amorphe Kieselsäure, Kaolin, Magnesiumkarbonat, Glimmer, Talkum und Feldspat enthalten. Die Schmelzefestigkeit, gemessen in Sekunden, ist die Zeit, welche ein zum Zeitpunkt Null am Düsenaustritt abgeschnittener und bei konstantem Volumenstrom der Schmelze neu austretender Schlauchabschnitt benötigt, um unter seinem Eigengewicht eine definierte Messstrecke zurückzulegen. Die Messwerte (in Sekunden) von entsprechenden Formmassen sind in den Tabellen 1 und 2 der EP 1 394 197 A1 zu finden. Der Inhalt der EP 1 394 197 A1 wird hiermit auch voll zum Inhalt dieser Anmeldung gemacht.

Gegenstand der Erfindung sind daher auch extrusionsblasgeformte Luftführungsteile mit deutlich reduzierter Oberflächenverkohlung bei Anwendungstemperaturen über 135°C und einer Einsatzdauer von größer 500 Stunden, insbesondere von größer 1000 Stunden, und besonders bevorzugt von größer 3000 Stunden, sowie einem längeren Erhalt der mechanischen Eigenschaften im Vergleich zu Teilen aus gleichen Polyamiden, die keine nanoskaligen Füllstoffe enthalten, wobei die Wandung des Luftführungsteils aus wenigstens einer Formmasse auf Basis von thermoplastischen Polymeren (a), ausgewählt aus der Gruppe der Polyamide (wie eingangs definiert) besteht, wobei die Formmasse weiterhin in Kombination enthält:
(b) nanoskalige Füllstoffe mit einer Teilchengröße von kleiner 500 nm in mindestens einer Dimension in einer Menge von 0,5 bis 15 Gew.-%, bezogen auf das Gesamtgewicht der Formmasse,
(c) faserförmige Füllmaterialien in Mengen von bis zu 65 Gew.-%, bevorzugt von bis zu 30 Gew.-%, bezogen auf das Gesamtgewicht der Formmasse,
(d) Schlagzähmodifikatoren in Mengen von 0 bis 25 Gew.-%, bevorzugt von 3 bis 12 Gew.-%, bezogen auf das Gesamtgewicht der Formmasse, und gegebenenfalls weitere übliche Zusatzstoffe.

Vorzugsweise sind die Luftführungsteile Ladeluftrohre für Turbolader im Kfz-Bereich.

Die erfindungsgemäßen Luftführungsteile können durch Extrusionsblasformen, Coextrusionsblasformen oder sequenzielles Blasformen, mit und ohne 3D-Schlauchmanipulation hergestellt werden.

In den erfindungsgemäßen Polymer-Systemen der Formmassen, in denen die Füllstoff-Partikel Dimensionen im Nanometer-Bereich, d.h. insbesondere mit einer Teilchengröße von kleiner 500 nm in mindestens einer Dimension aufweisen, ergeben sich folgende Effekte: Der thermische Ausdehnungskoeffizient ist verglichen mit dem von ungefüllten Matrixpolymeren besonders in Verarbeitungsrichtung deutlich reduziert, die feinverteilten Nanopartikel führen zu einer deutlich höheren Schmelzestabilität (mindestens 30 % erhöht) im Vergleich zu nicht modifiziertem Polyamid. Durch die molekulare Verstärkung ergibt sich auch bei höheren Temperaturen eine erhebliche Verbesserung der mechanischen Eigenschaften.

Als Polyamide (PA) für die erfindungsgemäßen Formmassen, werden vorteilhafterweise Polymerisate aus Monomeren oder Monomergemischen, ausgewählt aus aliphatischen C₆-C₁₂-Lactamen oder ω-Aminocarbonsäuren mit 4 bis 44 Kohlenstoffatomen, bevorzugt 4 bis 18 Kohlenstoffatomen, oder Polykondensate verwendet, erhältlich aus Monomeren umfassend mindestens einem Diamin aus der Gruppe der aliphatischen Diamine mit 4 bis 18 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen. Dabei sind auch Blends der vorgenannten Polymerisate und/oder Polykondensate oder Copolyamide aus beliebigen Kombinationen der genannten Monomeren geeignet. Die ω-Aminocarbonsäuren oder die Lactame sind ausgewählt aus der Gruppe aus ε-Aminocarbonsäure, 11-Aminoundecansäure, 12-Aminododecansäure, ε-Caprolactam, Enanthlactam, ω-Laurinlactam, oder Mischungen davon. Weiterhin ist es erfindungsgemäß möglich, Blends der vorgenannten Polymerisate bzw. Polykondensate einzusetzen. Erfindungsgemäß geeignete Diamine, die mit einer Dicarbonsäure kombiniert werden, sind beispielsweise 2,2,4- oder 2,4,4-Trimethylhexamethylendiamin, 1,3-oder 1,4-Bis(aminomethyl)cyclohexan, Bis(p-aminocyclohexyl)methan, m- oder p-Xylylendiamin, 1,4-Diaminobutan, 1,6-Diaminohexan, Methyl-Pentamethylen-Diamin, Nonandiamin, Methyl-Octamethylen-Diamin, 1,10-Diaminodecan, 1,12-Diaminododecan, Cyclohexyldimethylenamin, und die Dicarbonsäuren ausgewählt sind aus der Gruppe aus Bernsteinsäure, Glutarsäure, Adipinsäure, Suberinsäure, Pimelinsäure, Korksäure, Azelainsäure, Sebazinsäure, Dodecandicarbonsäure, 1,6-Cyclohexandicarbonsäure, Terephthalsäure, Isophthalsäure, Naphthalindicarbonsäure. Selbstverständlich können für Copolyamide beliebige Mischungen von erwähnten Monomeren, sowie im Falle von Polyamidelastomeren noch zusätzliche Bausteine verwendet werden, die zu Ester-, Etherester- oder Ether-Einheiten bzw. -Blöcken führen (z.B. Diole oder Polyether mit Hydroxyl- oder Aminoendgruppen).

Konkrete Beispiele für die Polyamide für die erfindungsgemäße Formmassen sind daher solche Homo- oder Copolyamide aus der Gruppe aus PA 6, PA 46, PA 66, PA 11, PA 12, PA 1212, PA 1012, PA 610, PA 612, PA 69, PA 99, PA 9T, PA 10T, PA 12T, PA 12I, deren Gemische oder Copolymere auf Basis dieser Polyamide, wobei PA 11, PA 12, PA 1212, PA 9T, PA 10T, PA 12T, PA 12T/12, PA 10T/12, PA 12T/106, PA 10T/106 oder deren Gemische bevorzugt sind. Weiterhin können erfindungsgemäß auch Copolyamide wie PA 6/66, PA 6/612, PA 6/66/610, PA 6/66/12, PA 6T/66, PA 6T/66/12, PA 6/6T, PA 6T/6, PA 6T/12, PA 6/6I, PA 6T/6I, PA 6I/6T oder deren Gemische, oder PA 12/MACMI, PA 66/6I/6T, PAMXD 6/6 eingesetzt werden. Ganz besonders bevorzugt sind Mischungen aus PA 6 und PA 66, sowie auch Polyamidelastomere wie z. B. Polyesteramide, Polyetheresteramide und Polyetheramide.

Die Polyamide können amorph oder teilkristallin, aliphatisch, cycloaliphatisch oder teilaromatisch sein.

Die Polyamide (PA 6, PA 66) für die erfindungsgemäßen Formmassen weisen bevorzugt eine relative Viskosität (gemessen an einer 1,0 gew.-%igen Lösung in Schwefelsäure bei 20°C) von 2,3 bis 4,0, insbesondere von 2,6 bis 3,8 auf.

Den zuvor beschriebenen Polyamiden oder Gemischen davon können aber auch für bestimmte Zwecke noch andere übliche Polymere wie Polyester, Polycarbonate, Polyolefine (z.B. Polyethylen oder Polypropylen), Polyethylenvinylalkohole, Styrol-Polymere, Fluorpolymere, PPS oder PPO in Mengen von bis zu 50 Gew.-%, insbesondere von bis zu 30 Gew.-%, zugesetzt sein.

Die erfindungsgemäßen Polyamid-Formmassen enthalten wenigstens 30 Gew.-% Polyamid, bevorzugt wenigstens 50 Gew.-% Polyamid. Es ist aber auch möglich, dass ein Copolymer mit Polyamidbausteinen zusätzlich zu den genannten Polyamiden oder alleine in den Formmassen eingesetzt wird. Ein solches Copolymer enthält mindestens 20 Gew.-% Polyamidbausteine. In einer bevorzugten Ausführungsform enthält dieses Copolyamid mindestens 30 Gew.-% Polyamidbausteine, besonders bevorzugt mindestens 40 Gew.-% Polyamidbausteine. Das Copolymer kann ein Blockcopolymer sein, welches Polyester-, Polyether-, Polysiloxan-, Polycarbonat-, Polyacrylat-, Polymethacrylat- oder Polyolefinsegmente als weitere Bausteine neben einem Anteil von mindestens 20 Gew.-%, insbesondere 30 Gew.-%, besonders bevorzugt 40 Gew.-%, Polyamidbausteinen enthält.

Weiterhin enthalten die verwendeten Polyamide bzw. die Formmassen gegebenenfalls übliche Zusatzstoffe wie UV- und Hitzestabilisatoren, Antioxidantien, Kristallisations-Beschleuniger, Kristallisations-Verzögerer, Nukleierungsmittel, Fließhilfsmittel, Gleitmittel, Entformungsmittel, Weichmacher, Flammschutzmittel, Pigmente, Farbstoffe, sowie Mittel, die die elektrische Leitfähigkeit verbessern können (Ruß, Graphitfibrillen, etc.).

Als weitere Zusatzstoffe können den erfindungsgemäßen thermoplastischen Polymeren, insbesondere den Polyamiden bzw. Polyamidformassen, Schlagzähmodifikatoren zugesetzt sein. Die Schlagzähmodifikatoren, die mit dem Polyamid und den nanoskaligen Füllstoffen, insbesondere dem Nanofüllstoff im erfindungsgemäßen Sinne kombiniert werden können, sind bevorzugt Polymere auf Polyolefinbasis, die funktionalisiert sein können, z.B. mit Maleinsäureanhydrid. Insbesondere seien hier Schlagzähmodifikatoren wie Ethylen-Propylen-Kautschuke (EPM, EPR) oder Ethylen-Propylen-Dien-Kautschuke (EPDM), styrolhaltige Elastomere, z.B. SEBS, SBS, SEPS, oder Acrylatkautschuke genannt. Als Schlagzähmodifikatoren sind aber auch Nitril-Kautschuke (NBR, H-NBR), Siliconkautschuke, EVA und Microgele, wie sie in der WO 2005/033185 A1 beschrieben sind, sowie Mischungen verschiedener Schlagzähmodifikatoren geeignet.

Als nanoskalige Füllstoffe zur Herstellung von erfindungsgemäßen Nanocomposites eignen sich solche Stoffe, welche in jeder beliebigen Stufe der Herstellung zugegeben werden können und dabei im Nanometerbereich fein verteilbar sind. Die erfindungsgemäßen nanoskaligen Füllstoffe können oberflächenbehandelt sein. Es können aber auch unbehandelte Füllstoffe oder Mischungen aus unbehandelten und behandelten Füllstoffen eingesetzt werden. Die nanoskaligen Füllstoffe haben eine Teilchengröße von kleiner als 500 nm in mindestens einer Dimension. Die Füllstoffe sind bevorzugt Mineralien, die bereits eine Schichtstruktur aufweisen, wie Schichtsilikate und Doppelhydroxide.

Die erfindungsgemäß eingesetzten nanoskaligen Füllstoffe sind ausgewählt aus der Gruppe der Oxide, Oxidhydrate von Metallen oder Halbmetallen. Insbesondere sind die nanoskaligen Füllstoffe ausgewählt aus der Gruppe der Oxide und Oxidhydrate eines Elements, ausgewählt aus der Gruppe aus Bor, Aluminium, Calcium, Gallium, Indium, Silizium, Germanium, Zinn, Titan, Zirkonum, Zink, Ytrium oder Eisen.

In einer besonderen Ausführungsform der Erfindung sind die nanoskaligen Füllstoffe entweder Siliziumdioxid oder Siliziumdioxid-Hydrate. In der Polyamidformmasse liegen die nanoskaligen Füllstoffe in einer Ausführungsform als ein gleichmäßig dispergiertes, schichtförmiges Material vor. Vor dem Einarbeiten in die Matrix besitzen sie eine Schichtdicke von 0,7 bis 1,2 nm und einen Zwischenschichtabstand der Mineralschichten von bis zu 5 nm.

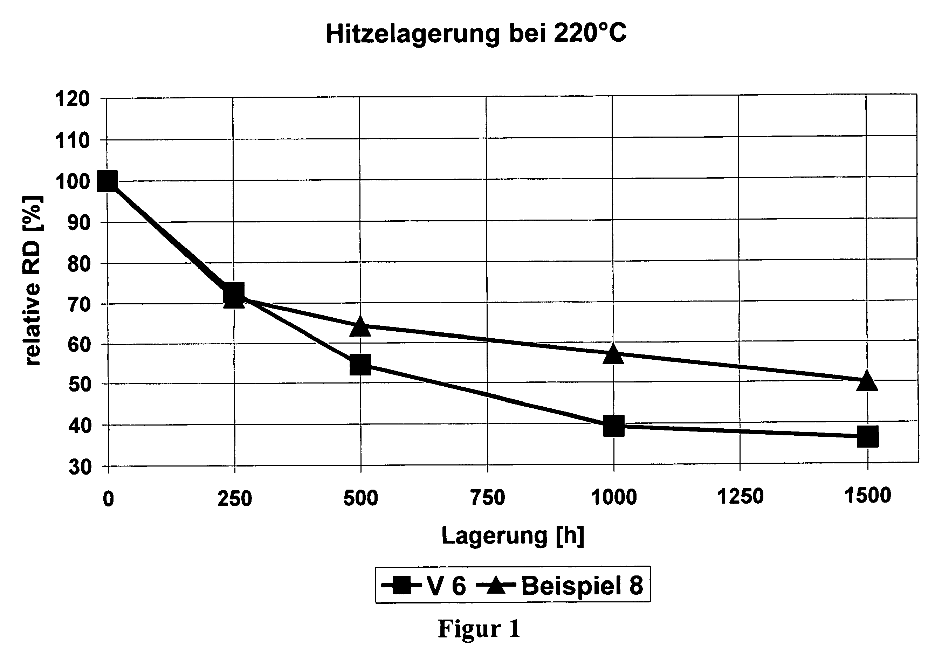

Erfindungsgemäß bevorzugte Mineralien, die bereits eine Schichtstruktur aufweisen, sind natürliche und synthetische Schichtsilikate und Doppelhydroxide wie Hydrotalcit. Ebenso eignen sich erfindungsgemäß Nanofüllstoffe auf Basis von Siliconen, Silica oder Silsesquioxanen (siehe Abb. 1).

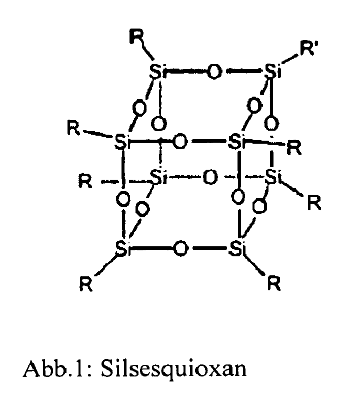

Unter Schichtsilikaten im erfindungsgemäßen Sinne werden 1:1 sowie 2:1 Schichtsilikate verstanden. In diesen Systemen sind Schichten aus SiO₄-Tetraedern mit solchen aus M(O,OH)₆-Oktaedem in regelmäßiger Weise miteinander verknüpft. M steht dabei für Metallionen wie Al, Mg, Fe. Bei den 1: 1 -Schichtsilikaten sind dabei jeweils eine Tetraeder- und eine Oktaederschicht miteinander verbunden. Beispiele hierfür sind Kaolin- und Serpentin-Minerale.

Bei den 2:1 Schichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen besetzt, treten geladene Schichten auf. Diese negative Ladung wird durch den Einbau einwertiger Kationen wie Kalium, Natrium oder Lithium oder zweiwertiger wie Calcium in den Raum zwischen den Schichten ausgeglichen. Beispiele für 2:1-Schichtsilikate sind Talkum, Vermiculite, Illite sowie Smectite, wobei die Smectite zu denen auch der Montmorillonit gehört, sich wegen ihrer Schichtladung leicht mit Wasser quellen lassen. Weiterhin sind die Kationen leicht für Austauschprozesse zugänglich.

Die nanoskaligen Füllstoffe sind bevorzugt ausgewählt aus der Gruppe der natürlichen und synthetischen Schichtsilikate, insbesondere aus der Gruppe aus Bentonit, Smectit, Montmorillonit, Saponit, Beidellit, Nontronit, Hektorit, Stevensit, Vermiculit, Illite, Pyrosit, der Gruppe der Kaolin- und Serpentin-Minerale, Doppelhydroxide, oder solche Füllstoffe auf Basis vom Siliconen, Silica oder Silsesquioxanen sind, wobei Montmorillonit besonders bevorzugt ist.

Die Schichtdicken der Schichtsilikate betragen vor der Quellung üblicherweise 0,5-2,0 nm, ganz besonders bevorzugt 0,8-1,5 nm (Abstand der Schichtoberkante zur folgenden Schichtoberkante). Hierbei ist es möglich, den Schichtabstand weiter zu vergrössern, indem man das Schichtsilikat beispielsweise mit Polyamidmonomeren, z. B. bei Temperaturen von 25-300°C, vorzugsweise von 80-280°C und insbesondere von 80-160°C über eine Verweilzeit von in der Regel 5-120 Minuten, vorzugsweise von 10-60 Minuten, umsetzt (Quellung). Je nach Art der Verweilzeit und der Art des gewählten Monomeren vergrössert sich der Schichtabstand zusätzlich um 1-15 nm, vorzugsweise um 1-5 nm. Die Länge der Plättchen beträgt üblicherweise bis zu 800 nm, vorzugsweise bis zu 400 nm. Etwa vorhandene oder sich aufbauende Präpolymere tragen in der Regel ebenfalls zur Quellung der Schichtsilikate bei.

Die quellfähigen Schichtsilikate sind durch ihre Ionenautauschkapazität CEC (meq/g) und ihren Schichtabstand d_{L} charakterisiert. Typische Werte für CEC liegen bei 0,7 bis 0,8 meq/g. Der Schichtabstand bei einem trockenen unbehandeltem Montmorillonit liegt bei 1 nm und steigt durch Quellung mit Wasser oder Belegung mit organischen Verbindungen auf Werte bis zu 5 nm.

Beispiele für Kationen, die für Austauschreaktionen eingesetzt werden können, sind Ammoniumsalze von primären Aminen mit mindestens 6 Kohlenstoffatomen wie Hexanamin, Decanamin, Dodecanamin, Stearylamine, hydrierte Fettsäureamine oder auch quarternäre Ammoniumverbindungen sowie Ammoniumsalze von α-,ω-Aminosäuren mit mindestens 6 Kohlenstoffatomen. Weitere Stickstoff enthaltende Aktivierungsreagentien sind auf Triazin basierende Verbindungen. Derartige Verbindungen sind beispielsweise in EP-A-1 074 581 beschrieben, auf dieses Dokument wird daher besonders Bezug genommen.

Als Anionen eignen sich Chloride, Sulfate oder auch Phosphate. Neben Ammoniumsalzen können auch Sulfonium- oder Phosphoniumsalze wie beispielsweise Tetraphenyl- oder Tetrabutylphosphoniumhalogenide zur Verwendung kommen.

Da üblicherweise Polymere und Mineralien sehr unterschiedliche Oberflächenspannungen besitzen, können erfindungsgemäß zusätzlich zum Kationenaustausch auch Haftvermittler zur Behandlung der Minerale verwandt werden. Hierbei eignen sich Titanate oder auch Silane wie γ-Aminoproplytriethoxysilan. Die Haftvermittler können vorzugsweise in Mengen von bis zu 10 Gew.-% in der Formmasse enthalten sein.

Erfindungsgemäß können somit, wie oben beschrieben ist, Schichtsilikate eingesetzt werden, die mit Onium-Ionen modifiziert worden sind. Es besteht aber auch die Möglichkeit, nicht oberflächenbehandelte Phyllosilikate einzusetzen, welche dann gemäß WO 99/29767(DSM) umgesetzt worden sind. Der Polyamidnanocomposite wird dann derart hergestellt, dass man zunächst das Polyamid mit dem unbehandelten Tonmineral in einem Mischer mischt, diese Mischung in den Einzug eines Extruders gibt, und nach Herstellung einer Schmelze bis zu 30 Gew.-% Wasser injiziert, das Wasser durch die Entgasungsöffnung entweichen lässt und dann die Schmelze durch eine Düse austreten lässt. Der erhaltene Strang kann dann weiter zu Granulat verarbeitet werden.

In ausgewählten Ausführungsformen werden als weitere Füllstoffe faserförmige Füllmaterialien in Mengen von bis zu 65 Gew.-%, bevorzugt bis zu 45 Gew.-%, ganz besonders bevorzugt bis zu 30 Gew.-%, , bezogen auf das Gesamtgewicht der Formmasse, zugesetzt. Beispiele geeigneter faserförmiger Füllstoffe sind Glasfasern, insbesondere E-Glasfasern, Kohlenstofffasern, Kaliumtitanatwhisker, oder Aramidfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6-16 µm. Die Einarbeitung der Glasfasern kann sowohl in Form von Kurzglasfasern als auch in Form von Endlossträngen (Rovings) erfolgen.

Die erfindungsgemäßen Formmassen können darüber hinaus weitere Zusatzstoffe enthalten. Als solche Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleitmittel und Entformungsmittel, Flammschutzmittel, Farbstoffe, Pigmente und Weichmacher zu nennen.

Pigmente und Farbstoffe sind allgemein in Mengen von 0 bis 4 Gew.-%, bevorzugt von 0,5 bis 3,5 Gew.-% und besonders bevorzugt von 0,5 bis 2 Gew.-%, bezogen auf das Gesamtgewicht der Zusammensetzung, enthalten. Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494-510.

Schwarze Farbpigmente, die erfindungsgemäß eingesetzt werden können, sind Eisenoxidschwarz (Fe₃O₄), Manganschwarz (Mischung aus Mangandioxid, Siliciumdioxid und Eisenoxid), sowie besonders bevorzugt Ruß, der meist in der Form von Furnace- oder Gasruß eingesetzt wird (siehe hierzu G. Benzing, Pigmente für Anstrichmittel, Expert-Verlag (1998), Seiten 78 ff.).

Selbstverständlich können zur Einstellung bestimmter Farbtöne anorganische Buntpigmente wie oder organische Buntpigmente wie Azopigmente und Phthalocyanine erfindungsgemäß eingesetzt werden. Derartige Pigmente sind allgemein im Handel erhältlich.

Weiterhin kann es von Vorteil sein, die genannten Pigmente bzw. Farbstoffe in Mischungen einzusetzen, z. B. Ruß mit Kupferphthalocyaninen, da allgemein die Farbdispergierung im Thermoplasten erleichtert wird. Oxidationsverzögerer und Wärmestabilisatoren, die den thermoplastischen Massen gemäß der Erfindung zugesetzt werden können, sind z.B. Halogenide von Metallen der Gruppe I des Periodensystems, z. B. Natrium, Kalium, Lithium-Halogenide, gegebenenfalls in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Ferner sind sterisch gehinderte Phenole, gegebenenfalls in Verbindung mit phosphorhaltigen Säuren bzw. deren Salze, und Mischungen dieser Verbindungen, im allgemeinen in Konzentrationen bis zu 1 Gew.-%, bezogen auf das Gewicht der Mischung einsetzbar.

Beispiele für UV-Stabilisatoren sind verschiedene substituierte Benzotriazole und sterisch gehinderte Amine (HALS), die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester, und -amide sowie Ester des Pentaerythrits mit langkettigen Fettsäuren. Es können auch Salze des Calciums, Magnesiums, Zinks oder Aluminiums der Stearinsäure, eingesetzt werden.

Die Herstellung der erfindungsgemäßen Formmassen kann auf unterschiedlichen Wegen erfolgen. Diverse Verfahrensführungen können für die Herstellung der erfindungsgemäßen Formmassen angewendet werden. Die Herstellung kann z.B. mittels eines diskontinuierlich oder eines kontinuierlich geführten Verfahrens erfolgen. Theoretisch kann die Herstellung der erfindungsgemäßen Formmassen durch Einbringen der Schichtsilikate während der Polymerisation oder durch anschließende Eincompoundierung in einem Extrusionsverfahren erfolgen. Derartige Herstellungsvorschriften können z.B. der DE-A-199 48 850 entnommen werden.

Erfindungsgemäß wurde aber gefunden, dass, wenn man die Schichtsilikate, sowie faserförmige Füllmaterialien und Schlagzähmodifikatoren durch anschließende Eincompoundierung in einem Extrusionsverfahren herstellt, besonders geeignete Formmassen herstellen kann, die durch Spritzguss, Extrusion und andere Verfahren nachher zu beliebigen Formteilen verarbeitet werden können.

Die erfindungsgemäßen Nanokomposite-Formmassen wurden daher in den Versuchen beispielsweise mittels Extrusionsverfahren, d.h. auf einem Compoundier-Extruder, im vorliegenden Fall auf einem 25 mm Doppelschneckenextruder ZSK 25 der Firma Werner & Pfleiderer bei Temperaturen zwischen 240°C und 350°C hergestellt. Dabei wurden die Polymeren zunächst aufgeschmolzen und das Silikatmineral in den Einzug des Extruders sowie gegebenenfalls die Glasfasern in die Schmelze zudosiert und die erhaltenen Nanocomposites nach Abkühlung in Wasser in Granulatform geschnitten.

Es ist aber alternativ auch möglich, dass das Schichtsilikat zunächst in Suspension, oder als Feststoff mit zu den polymerisierbaren Monomeren (z.B. Lactam) gemischt und gequollen wird. Danach werden die Polymeren und das so modifizierte Silikatmineral in den Einzug eines Extruders gegeben sowie gegebenenfalls Glasfasern in die Schmelze dosiert. Diese erhaltenen Nanocomposites werden anschließend gegebenenfalls mit den weiteren Komponenten, wie den mineralischen Füllstoffen und den Schlagzähmodifikatoren und gegebenenfalls weiteren Zusatzstoffen compoundiert.

Bei einem weiteren alternativen Verfahren werden die nanoskaligen Füllstoffe in Suspension oder als Feststoff mit der vollen Menge der zum thermoplastischen Kunststoff polymerisierbaren Monomeren gemischt, d.h. im Polymerisationsansatz. Es erfolgt eine Quellung des Schichtsilikats mit den Monomeren. Die anschließende Polymerisation der Monomere kann, wie üblich, im Polymerisationsreaktor durchgeführt werden. Die erhaltenen Nanocomposites werden anschließend gegebenenfalls mit den weiteren Komponenten, wie Füllmaterialien, Schlagzähmodifikatoren und den weiteren Zusatzstoffen weiter verarbeitet.

In einer bevorzugten Ausführungsform können, wie in den schon erwähnten Versuchen, die erfindungsgemäßen thermoplastischen Nanocomposites dadurch erhalten werden, dass das Polyamid und das Schichtsilikat, sowie gegebenenfalls die weiteren mineralischen Füllmaterialien, sowie gegebenenfalls der Schlagzähmodifikator und die anderen Zusatzstoffe nach allgemein bekannten Verfahren z.B. mittels Extrusion bei Temperaturen im Bereich von 160 °C bis 350 °C, besonders bevorzugt bei 240 °C bis 300 °C gemischt werden. Dazu eignet sich besonders ein Zweischneckenextruder mit hoher Scherung, wobei vorzugsweise Scherspannungen gemäß DIN 11443 von 10 bis 10⁵ Pa, insbesondere von 10² bis 10⁴ Pa vorliegen.

Die erhaltenen erfindungsgemäßen thermoplastischen Nanocomposites zeichnen sich, wenn sie zum Extrusionsblasformen vorgesehen sind, bevorzugt durch eine erhöhte Schmelzefestigkeit aus. Sie können aber generell zur Herstellung von beliebigen Formkörpern nach jedem Herstellungsverfahren verwendet werden.

Gegenstand der vorliegenden Anmeldung sind weiterhin die schon oben erwähnten extrusionsblasgeformten Luftführungsteile mit deutlich reduzierter Oberflächenverkohlung bei Anwendungstemperaturen über 135°C und einer Einsatzdauer von z.B. größer 500 Stunden sowie einem längeren Erhalt der mechanischen Eigenschaften (Reißdehnung und/oder Reißfestigkeit an 4-mm-Stäben, gemessen nach ISO 527) im Vergleich zu Teilen aus gleichen Polyamiden, die keine nanoskaligen Füllstoffe enthalten, wobei die Wandung des Luftführungsteils aus wenigstens einer Formmasse auf Basis von thermoplastischen Polymeren, ausgewählt aus der Gruppe der Polyamide (wie eingangs definiert) besteht, wobei die Formmasse weiterhin in Kombination enthält: nanoskalige Füllstoffe in einer Menge von 0,5 bis 15 Gew.-%, faserförmige Füllmaterialien in Mengen von bis zu 65 Gew.-%, Schlagzähmodifikatoren in Mengen von 0 bis 25 Gew.-%, insbesondere 3 bis 12 Gew.-%, jeweils bezogen auf das Gesamtgewicht der Formmasse, und gegebenenfalls weitere übliche Zusatzstoffe, wobei die thermische Stabilität und das Verkohlungsverhalten der Teile besser sind. In einer bevorzugten Ausführungsform der Erfindung ist überdies die Schmelzefestigkeit der Formmasse um mindestens 30 % höher, verglichen mit anderen Formmassen, die anstelle der nanoskaligen Füllstoffe lediglich übliche mineralische Füllmaterialien enthalten.

Die zuvor genannten extrusionsblasgeformten Luftführungsteile sind insbesondere Ladeluftrohre. In einer alternativen Ausführungsform kann auch neben einer ersten Formmasse eine weitere Formmasse eingesetzt werden, wobei die Zugelastizitätsmodule sich um wenigstens den Faktor 1,2 unterscheiden, aber beide Formmassen als Komponenten Polyamid enthalten. Die weitere Formmasse kann aufgebaut sein aus 0 bis 80 Gew.-% eines Kautschuk-elastischen Polymerisats, insbesondere aus einem Kern-Schale-Polymerisat, und 100 bis 20 Gew.-% eines Polyamids. Dadurch enthält das Luftführungsteil bzw. das Ladeluftrohr über seine gesamte Länge eine alternierende Zusammensetzung aus Hart- und Weichsegmenten. Dies kann z.B. durch sequenzielles Blasformen, d.h. sequenzielle Coextrusion mit alternierenden Stoffströmen erzielt werden. Dies kann in der Weise geschehen, dass die formgebende Düse abwechselnd von je einem der Extruder, d.h. abwechselnd mit der ersten Formmasse oder der zweiten Formmasse beschickt wird. Dabei wird ein Schlauch extrudiert, der über seine gesamte Länge eine alternierende Zusammensetzung mit Segmenten aus jeweils nur einer der beiden Formmassen oder ein unterschiedliches Schichtdickenverhältnis aufweist.

Die erfindungsgemäßen Luftführungsteile können auch gewellte Abschnitte aufweisen bzw. gewellte Bereiche enthalten. In Anspruch 27 werden besondere Rohrgeometrien, d.h. bestimmte Wellrohrgeometrien beschrieben. Diesbezüglich wird auf EP 863 351 B1 (EMS) verwiesen. Der Offenbarungsgehalt der EP 863 351 B1 wird hiermit auch vollständig zum Inhalt der vorliegenden Anmeldung gemacht.

Die Erfindung wird nun durch die nachstehenden Beispiele näher erläutert, ohne sich jedoch darauf einzuschränken.

### Beispiele

### Eingesetzte Materialien:

### Polyamide

| Polyamid-Typ | Relative Viskosität 1 %-ig in Schwefelsäure 20°C | Relative Viskosität 0,5 %-ig in m-Kresol 20°C | Volumenfliessindex (MVR) bei 275°C/5 kg (cm³/10 min) |
|---|---|---|---|
| PA6 | 3,40 | | 30 |
| PA66 | 2,75 | | 60 |
| PA12 | | 2,25 | 25 |

### Schichtsilikat

Na-Montmorillonit behandelt (modifiziert) mit 35 meq/100g Mineral mit Dimethyl-hydriertem Talg-ammoniumhydrochlorid.

Bei den Zugstäben mit der Nummer 3 aus Figur 4 wurde Na-Montmorillonit, bei dem der Kationenaustausch mit Methyl-Talg-bis-2-Hydroxyethylammoniumchlorid durchgeführt wurde, eingesetzt (90 meq/100g Mineral).

### d_{L}: 1,85 nm (entspricht beiden organisch modifizierten Schichtsilikaten)

### Schlagzähmodifikator

### Ethylen-Propylen-Copolymer, mit Maleinsäureanhydrid gepfropft

| | |
|---|---|
| MVR 275°C/5kg: | 13 cm³/10 min |
| Schmelzpunkt DSC: | 55°C |

### Glasfaser

### E-Glas, Polyamid-Typ, Durchmesser 10 µm, Länge 4,5 mm

Die erfindungsgemäßen Nanocomposite-Formmassen wurden auf einem 25mm-Doppelschneckenextruder ZSK 25 der Firma Werner & Pfleiderer bei Temperaturen zwischen 240 und 300°C hergestellt. Dabei wurden die Polymere und das Silikat-Mineral in den Einzug des Extruders sowie gegebenenfalls Glasfasern in die Schmelze dosiert.

Die Prüfung der erfindungsgemäßen und nicht erfindungsgemäßen Formmassen wurden gemäß folgenden Vorschriften durchgeführt:
- MVR:: (Melt volume rate) bei 275°C/21,6 kg oder 5 kg nach ISO 1133 (cm³/10 min) (MVR ist identisch mit dem früher als MVI bezeichneten Volumenfließindex.)
- SZ:: Schlagzähigkeit nach ISO 179/1eU

Reißdehnung (RD) und Reißfestigkeit (RF) wurden gemäß ISO 527 an 4-mm-Stäben ermittelt.

Aschegehalt: Rückstand nach Verbrennung bei 1000°C: effektiver Anteil an Montmorillonit (in den Formmassen von Tabelle 3, welche keine Glasfasern enthalten).

Zur Definition des Begriffes "Schmelzefestigkeit" bzw. zur Bestimmung der Schmelzefestigkeit sei Folgendes erläutert:
Unter Schmelzefestigkeit wird das *"Standvermögen"* des Vorformlings verstanden. Bei einer hohen Schmelzefestigkeit bleibt der Vorformling stabil, wohingegen sich bei einer niedrigen Schmelzefestigkeit der Vorformling stärker auslängt.

Das bedeutet, dass man zur Blasformverarbeitung Materialien benötigt, die eine hohe Schmelzefestigkeit aufweisen.

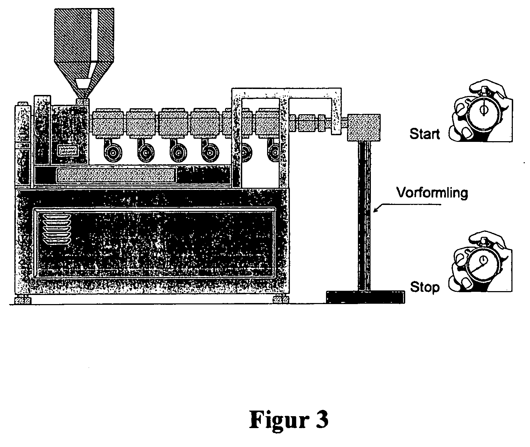

Dazu hat die Anmelderin ein eigenes Verfahren entwickelt, nach welchem die Schmelzefestigkeit beurteilt wird. Bei diesem Verfahren wird ein Schlauch kontinuierlich über einen Winkelkopf extrudiert. Als Messgröße wird die Zeit verwendet, die der Schlauch benötigt, um den Abstand (z.B. 1 Meter) von der Düse bis zum Boden zurückzulegen. Bei der Messung der Schmelzefestigkeit wird mit einem konstanten Ausstoß und einem an den Polymertyp angepassten Temperaturprofil gefahren (vgl. Figur 3).

Wie aus Figur 3 hervorgeht, wird die Zeitmessung in dem Moment gestartet, wenn der kontinuierlich austretende Schmelzeschlauch an der Extrusionsdüse mit einem Spachtel abgestochen wird. Man stoppt dann die Zeit, sobald der neu austretende und nach unten wandernde Schlauchabschnitt den Boden berührt.

Ein Material, das das zunehmende Eigengewicht (durch die laufend extrudierte Schmelze) schlecht tragen kann, d. h. sich viskos zu dehnen beginnt, wird sich stärker längen und dadurch die Spitze des Schmelzeschlauchs den Boden früher berühren, d. h. die kürzere Messzeit entspricht einer geringeren Schmelzefestigkeit.

Von praktischem Vorteil ist, dass die exakten Maschineneinstellungen wie z. B. Temperatur, Durchsatz, Schlauchdüse und Messhöhe, keine absolute Rolle spielen, weil es sich um Vergleichsmessungen handelt, bei denen die in Sekunden gemessenen Zeiten in Prozente umgerechnet werden können. Daher ist nur wesentlich, dass bei den Materialvarianten, die direkt untereinander verglichen werden, genau dieselbe Apparatur mit denselben Einstellungen verwendet wird. Die in Prozenten ausgedrückte (relative) Schmelzefestigkeit ist für den Fachmann auch auf nicht identischen Prüfmaschinen nachvollziehbar, weil vergleichende Schmelzefestigkeitsmessungen prozentual übertragbar sind. Deshalb ist z.B. die Aussage "mindestens 30 % höhere Schmelzefestigkeit" ausreichend aussagekräftig.

Wie sich in den nachfolgenden Tabellen zeigt, weisen die dort untersuchten erfindungsgemäßen Polyamid-Formmassen eine erhöhte Schmelzefestigkeit auf. Für Polyamid 6, Polyamid 66, Polyamid 12, bzw. Mischungen aus Polyamid 66 und Polyamid 6, werden erhöhte Schmelzefestigkeiten bei den in den Tabellen 1 und 2 angegebenen Temperaturen für unverstärkte und verstärkte Polyamide gemessen.

In den nachfolgenden Tabellen sind die Vorteile der erfindungsgemäßen Formmassen dargestellt, wobei die mit V beginnenden Versuche die nicht erfindungsgemäßen Vergleichsbeispiele sind.

**Tabelle 1: Unverstärkte Polyamide**

| | | Beispiel 1 | V 1 | Beispiel 2 | V2 | Beispiel 3 | V3 |
|---|---|---|---|---|---|---|---|
| | | | | | | | |
| PA6 | Gew.-% | 94 | 100 | 47 | 50 | --- | --- |
| PA66 | Gew.-% | --- | --- | 47 | 50 | --- | --- |
| PA12 | Gew.-% | --- | --- | --- | --- | 94 | 100 |
| Schichtsilikat | Gew.-% | 6 | --- | 6 | --- | 6 | |
| | | --- | --- | --- | --- | --- | --- |
| Schmelzefestigkeit 240°C | s* | --- | --- | --- | --- | 27 | 21 |
| Schmelzefestigkeit 260°C | s* | 20 | 6 | --- | --- | --- | --- |
| Schmelzefestigkeit 280°C | s* | --- | --- | 15 | 7 | --- | --- |

| | | | | | | | |
|---|---|---|---|---|---|---|---|
| * s = Sekunden | | | | | | | |

**Tabelle 2: Verstärkte Polyamide**

| | | Beispiel 4 | Beispiel 5 | V4 |
|---|---|---|---|---|
| | | | | |
| PA6 | Gew.-% | 40 | 39 | 42 |
| PA66 | Gew.-% | 40 | 39 | 42 |
| Schlagzähmodifikator | Gew.-% | 4 | 6 | 6 |
| Schichtsilikat | Gew.-% | 6 | 6 | --- |
| Glasfaser | Gew.-% | 10 | 10 | 10 |
| | | | | |
| Schmelzefestigkeit 280°C | s | 42 | 50 | 15 |
| MVR 275°C/21,6kg | cm³/10 min | 94 | 50 | 170 |
| Zug-E-Modul 23°C | MPa | 5750 | 5600 | 4900 |
| Zug-E-Modul 100°C | MPa | 1900 | 1800 | 1200 |
| Zug-E-Modul 150°C | MPa | 1450 | 1330 | 1150 |

**Tabelle 3: Reißdehnung an 4mm-Stäben, gemessen nach ISO 527**

| | | Beispiel 6 | V 5 |
|---|---|---|---|
| PA6 | Gew.-% | 46,8 | 49,8 |
| PA66 | Gew.-% | 46,8 | 49,8 |
| Montmorillonit (modifiziert) | Gew.-% | 6 | |
| Hitzestabilisator (Cu-haltig) | Gew.-% | 0,4 | 0,4 |
| | | | |
| Aschegehalt | Gew.-% | 4 | 0,1 |
| Anfangswert Reißdehnung ungelagert | % | 13,4 | 15,2 |
| Reißdehnung nach Ofenlagerung 400 h bei 200°C | % | 11,1 | 5,8 |

### Beispiel 7 (erfindungsgemäß)

Aus folgender Polyamid-Formmasse mit folgender Zusammensetzung:
Polyamid 6 und Polyamid 66, schlagzähmodifiziert, 15% Glasfasern,
6 Gew.-% modifizierter Montmorillonit
wurden Hohlkörper (Luftführungsteile) mittels Extrusionsblasformen hergestellt. Nach Lagerung der Teile von über 500 Stunden bei 200°C konnte bei den erfindungsgemäßen Formteilen kein thermooxidativer Abbau an der inneren und äußeren Oberfläche festgestellt werden. Im Vergleich dazu konnte bei Teilen, die keine Nanofüllstoffe enthalten, ein deutlicher thermooxidativer Abbauprozess an der Oberfläche festgestellt werden, welcher durch starke Kohlenstoffbildung an der Oberfläche verfolgt werden konnte.

**Tabelle 4**

| | | Beispiel 8 | V 6 |
|---|---|---|---|
| PA6 | Gew.-% | 29,3 | 32,3 |
| PA66 | Gew.-% | 29,3 | 32,3 |
| Glasfasern | Gew.-% | 30 | 30 |
| Montmorillonit (modifiziert) | Gew.-% | 6 | 0 |
| Schlagzähmodifikator | Gew.-% | 5 | 5 |
| Hitzestabilisator (Cu-haltig) | Gew.-% | 0,4 | 0,4 |

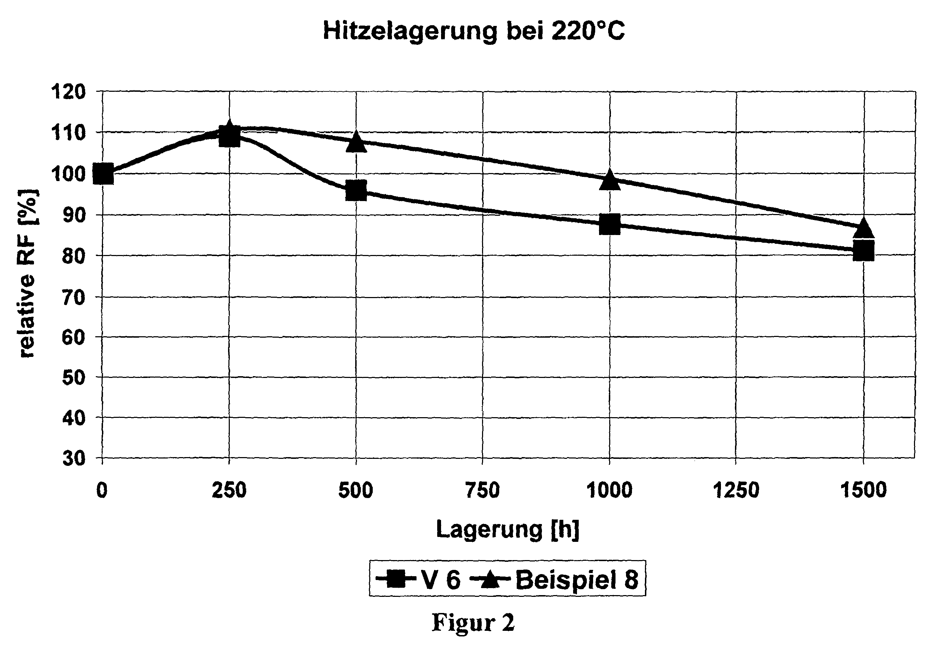

Eigenschaften siehe Figur 1 und Figur 2

Das Beispiel 8 zeigt gegenüber der Vergleichsvariante V6 einen signifikant längeren Erhalt der mechanischen Eigenschaften, vor allem bei Langzeit-Hitzelagerung, gemessen an der relativen Reißdehnung RD (vgl. Figur 1) und der relativen Reißfestigkeit RF (vgl. Figur 2). "Relativ" bedeutet hier: bezogen auf die absoluten Anfangswerte vor der Hitzelagerung von Reißfestigkeit und Reißdehnung an 4-mm-Stäben, gemessen nach ISO 527.

In der Figur 4 ist folgendes dargestellt: Von den paarweise abgebildeten Zugstäben ist jeweils der helle einer vor der Hitzelagerung und der schwarze ein Zugstab gleicher Zusammensetzung nach der Lagerung von 408 Stunden bei 230°C. Die Zugstäbe mit den Nummern 1, 2 bzw. 3 waren aus verschiedenen Formmassen hergestellt: Stab 1: PA6/PA66 (1:1); Stab 2: PA6/PA66 (1:1) mit 5 % Schlagzähmodifikator, und Stab 3 (erfindungsgemässes Beispiel): PA6/PA66 (1:1) mit 5 % Schlagzähmodifikator und 6 % Montmorillonit (modifiziert gemäss zweiter angegebener Schichtsilikat-Modifikation). Alle drei Varianten haben noch 0,4 % Hitzestabilisator (Cu-haltig) enthalten. Die Vergleichsstäbe 1 und 2 zeigen nach der Hitzelagerung deutliche Oberflächendefekte durch Verkohlung, während der erfindungsgemässe Stab 3 nach der Hitzelagerung nur dunkler gefärbt, seine Oberfläche aber noch unversehrt ist.

## Patentansprüche

1. Verwendung von Formmassen auf Basis von thermoplastischen Polymeren ausgewählt aus der Gruppe der Polyamide, enthaltend nanoskalige Füllstoffe, die in mindestens einer Dimension kleiner als 500 nm sind, in einer Menge von 0,5 bis 15 Gew.-%, bezogen auf das Gesamtgewicht der Formmasse, und gegebenenfalls weitere Zusatzstoffe, zur Herstellung von Formteilen mit längerem Erhalt der mechanischen Eigenschaften Reißdehnung und/oder Reißfestigkeit und mit deutlich reduzierter Oberflächenverkohlung bei Einsatz der Formteile unter auftretenden Anwendungstemperaturen (Luft) von über 135°C im Vergleich zu Formteilen aus gleichen Polyamiden, die keine nanoskaligen Füllstoffe enthalten.

2. Verwendung gemäß Anspruch 1, wobei die Formteile eine deutlich reduzierte Oberflächenverkohlung bei Einsatz unter Temperaturen (Luft) über 150°C, bevorzugt über 200°C aufweisen, insbesondere bei einer Einsatzdauer von über 500 Stunden, bevorzugt über 1000 Stunden, besonders bevorzugt von über 3000 Stunden.

3. Verwendung gemäß einem der vorhergehenden Ansprüche 1 oder 2, wobei die Formmassen bis zu 65 Gew.-%, bevorzugt bis zu 30 Gew.-%, bezogen auf das Gesamtgewicht der Formmasse, an Verstärkungsstoffen (ausgenommen nanoskalige Schichtsilikate), insbesondere an faserförmigen Füllmaterialien, enthalten.

4. Verwendung gemäß einem der vorhergehenden Ansprüche 1 bis 3, wobei die Formmassen Schlagzähmodifikatoren in Mengen von 0 bis 25 Gew.-%, bevorzugt von 3 bis 12 Gew.-%, bezogen auf das Gesamtgewicht der Formmassen, enthalten.

5. Verwendung der Formmassen gemäß einem oder mehreren der Ansprüche 1 bis 4 und einer weiteren Formmasse aus einem thermoplastischen Polymer ausgewählt aus der Gruppe der Polyamide, wobei sich die Zugelastizitätsmodule der beiden Formmassen um mindestens einen Faktor 1,2 unterscheiden und die Formmassen jeweils Polyamid enthalten.

6. Verwendung gemäß Anspruch 5, wobei die weitere Formmasse aufgebaut ist aus 0 bis 80 Gew.-% eines Kautschuk-elastischen Polymerisats, insbesondere aus einem Kem-Schale-Polymerisat, und 100 bis 20 Gew.-% eines Polyamids.

7. Verwendung gemäß einem der Ansprüche 1 bis 6, wobei die Polyamide für die Formmassen eine relative Viskosität, gemessen an einer 1,0 gewichtsprozentigen Lösung in Schwefelsäure bei 20°C, von 2,3 bis 4,0, insbesondere von 2,6 bis 3,8, aufweisen.

8. Verwendung gemäß einem der vorhergehenden Ansprüche 1 bis 7, wobei in den Formmassen nanoskalige Füllstoffe in einer Menge von 2-10 Gew.-% und als weitere Zusatzstoffe faserförmige Füllmaterialien in einer Menge von 0-30 Gew.-%, jeweils bezogen auf das Gesamtgewicht der Formmasse, enthalten sind.

9. Verwendung gemäß einem der Ansprüche 1 bis 8, wobei die nanoskaligen Füllstoffe aus der Gruppe der natürlichen und synthetischen Schichtsilikate ausgewählt sind, insbesondere aus der Gruppe aus Bentonit, Smectit, Montmorillonit, Saponit, Beidellit, Nontronit, Hektorit, Stevensit, Vermiculit, Illite, Pyrosit, der Gruppe der Kaolin- und Serpentin-Minerale, Doppelhydroxide, oder solche Füllstoffe auf Basis vom Siliconen, Silica oder Silsesquioxanen sind, wobei Montmorillonit besonders bevorzugt ist.

10. Verwendung gemäß Anspruch 9, wobei das Mineral mit Haftvermittlern behandelt worden ist und der Haftvermittler bis zu 10 Gew.-% in der Formmasse enthalten ist.

11. Verwendung gemäß einem der vorhergehenden Ansprüche 1 bis 10, wobei die Polyamide Polymerisate aus Monomeren oder Monomergemischen sind, ausgewählt aus aliphatischen C₆-C₁₂ Lactamen oder ω-Aminocarbonsäuren mit 4 bis 44 Kohlenstoffatomen, bevorzugt 4 bis 18 Kohlenstoffatomen, oder Polykondensate sind, erhältlich aus Monomeren umfassend mindestens einem Diamin aus der Gruppe der aliphatischen Diamine mit 4 bis 12 C-Atomen, der cycloaliphatischen Diamine mit 7 bis 22 C-Atomen und der aromatischen Diamine mit 6 bis 22 C-Atomen in Kombination mit mindestens einer Dicarbonsäure aus der Gruppe aus aliphatischen Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen, wobei ebenfalls Blends der vorgenannten Polymerisate und/oder Polykondensate oder Copolyamide aus beliebigen Kombinationen der genannten Monomeren sowie zusätzlichen Bausteinen aus der Gruppe Diole, Polyether mit Hydroxylendgruppen und Polyether mit Aminoendgruppen geeignet sind.

12. Verwendung gemäß Anspruch 11, wobei die ω-Aminocarbonsäuren und die Lactame ausgewählt sind aus der Gruppe aus ε-Aminocapronsäure, 11-Aminoundecansäure, 12-Aminododecansäure, ε-Caprolactam, Enanthlactam, ω-Laurinlactam oder Mischungen davon.

13. Verwendung gemäß Anspruch 11, wobei die Diamine ausgewählt sind aus der Gruppe aus 2,2,4- oder 2,4,4-Trimethylhexamethylendiamin, 1,3- oder 1,4-Bis(aminomethyl) cyclohexan, Bis(p-aminocyclohexyl)methan, m- oder p-Xylylendiamin, 1,4-Diaminobutan, 1,6-Diaminohexan, Methyl-Pentamethylen-Diamin, Nonandiamin, Methyl-Octamethylen-Diamin, 1,10-Diaminodecan, 1,12-Diaminododecan, Cyclohexyldimethylenamin, und die Dicarbonsäuren ausgewählt sind aus der Gruppe aus Bernsteinsäure, Glutarsäure, Adipinsäure, Suberinsäure, Pimelinsäure, Korksäure, Azelainsäure, Sebazinsäure, Dodecandicarbonsäure, 1,6-Cyclo-hexandicapronsäure, Terephthalsäure, Isophthalsäure, Naphthalindicarbonsäure, oder Mischungen davon.

14. Verwendung gemäß einem der Ansprüche 1 bis 13, wobei die Polyamide Homopolyamide oder Copolyamide sind, ausgewählt aus der Gruppe aus Polyamid 6, Polyamid 46, Polyamid 66, Polyamid 11, Polyamid 12, Polyamid 1212, Polyamid 1012, Polyamid 610, Polyamid 612, Polyamid 69, Polyamid 99, Polyamid 9T, Polyamid 12T, Polyamid 10T, Polyamid 12I, Polyamid 12T, Polyamid 12T/12, Polyamid 10T/12, Polyamid 12T/10 6, Polyamid 10T/10 6, Polyamid 6/66, Polyamid 6/612, Polyamid 6/66/610, Polyamid 6/66/12, Polyamid 6/6T, PA 6T/6, PA 6T/12, Polyamid 6T/6I, Polyamid 61/6 T, Polyamid 6/6I, Polyamid 6T/66, Polyamid 6T/66/12, Polyamid 12/MACMI, Polyamid 66/6I/6T, Polyamid MXD6/6, Polyesteramide, Polyetheresteramide, Polyetheramide, oder deren Gemische, Blends oder Legierungen.

15. Verwendung gemäß einem der Ansprüche 1 bis 14, wobei den Formmassen weitere Polymere in Mengen von bis zu 50 Gew.-%, insbesondere von bis zu 30 Gew.-%, aus der Gruppe der Polyester, Polycarbonate, Polyolefine, der Polyethylenvinylalkohole, der Styrol-Polymere, der Fluorpolymere oder aus der Gruppe aus PPS, PPO zugesetzt sind.

16. Verwendung gemäß einem der Ansprüche 1 bis 15, wobei den Formmassen weitere Zusatzstoffe aus der Gruppe der UV- und Hitze-Stabilisatoren, der Antioxidantien, der Pigmente, Farbstoffe, Nukleierungsmittel, Kristallisations-Beschleuniger, Kristallisations-Verzögerer, Fließhilfsmittel, Gleitmittel, Entformungsmittel, Weichmacher, Flammschutzmittel, sowie Mittel, die die elektrische Leitfähigkeit verbessern, zugesetzt sind.

17. Verwendung gemäß einem der Ansprüche 1 bis 16, wobei die weiteren Zusatzstoffe bzw. die faserförmigen Füllmaterialien Glasfasern, insbesondere E-Glasfasern, sind.

18. Verwendung gemäß einem der vorhergehenden Ansprüche 1 bis 17, wobei die weiteren Zusatzstoffe Schlagzähmodifikatoren sind, ausgewählt aus der Gruppe der Polymere auf Basis von Polyolefinen, die funktionalisiert sein können, insbesondere Ethylen-Propylen-Kautschuke (EPM, EPR), Ethylen-Propylen-Dien-Kautschuke (EPDM), Acrylatkautschuke, styrolhaltige Elastomere z.B. SEBS, SBS, SEPS; sowie Nitrilkautschuke (NBR, H-NBR), Siliconkautschuke, EVA, Microgele und Mischungen verschiedener Schlagzähmodifikatoren.

19. Verwendung gemäß einem oder mehreren der Ansprüche 1 bis 18, wobei die Formteile Spritzgussteile oder Extrusionsformteile oder extrusionsblasgeformte Teile sind.

20. Verwendung gemäß Anspruch 19, wobei die extrusionsblasgeformten Teile Luftführungsteile für Kraftfahrzeuge sind.

21. Verwendung gemäß Anspruch 19 oder 20, wobei die Luftführungsteile Ladeluftrohre für Turbolader im Kfz-Bereich sind.

22. Verwendung gemäß einem der Ansprüche 19 bis 21, wobei die Formmassen hochviskose Extrusionsblasformmassen sind.

23. Extrusionsblasgeformte Luftführungsteile mit deutlich reduzierter Oberflächenverkohlung bei Anwendungstemperaturen über 135°C und einer Einsatzdauer von größer 500 Stunden, insbesondere von größer 1000 Stunden, sowie einem längeren Erhalt der mechanischen Eigenschaften (Reißdehnung und/oder Reißfestigkeit) im Vergleich zu Teilen aus gleichen Polyamiden, die keine nanoskaligen Füllstoffe enthalten, wobei die Wandung des Luftführungsteils aus wenigstens einer Formmasse auf Basis von thermoplastischen Polymeren (a), ausgewählt aus der Gruppe der Polyamide besteht, wobei die Formmasse weiterhin in Kombination enthält:
(b) nanoskalige Füllstoffe mit einer Teilchengröße von kleiner 500 nm in mindestens einer Dimension in einer Menge von 0,5 bis 15 Gew.-%, bezogen auf das Gesamtgewicht der Formmasse,
(c) faserförmige Füllmaterialien in Mengen von bis zu 65 Gew.-%, bevorzugt von bis zu 30 Gew.-%, bezogen auf das Gesamtgewicht der Formmasse,
(d) Schlagzähmodifikatoren in Mengen von 0 bis 25 Gew.-%, bevorzugt von 3 bis 12 Gew.-%, bezogen auf das Gesamtgewicht der Formmasse, und gegebenenfalls weitere übliche Zusatzstoffe,
wobei bevorzugt die Formmasse eine um mindestens 30 % höhere Schmelzefestigkeit als gleiche Formmassen aufweist, welche anstelle der nanoskaligen Füllstoffe lediglich übliche mineralische Füllmaterialien wie amorphe Kieselsäure, Magnesiumkarbonat (Kreide), Kaolin, zerpulverter Quarz, Glimmer, Talkum und Feldspat, enthalten.

24. Extrusionsblasgeformte Luftführungsteile gemäß Anspruch 23, **dadurch gekennzeichnet, dass** sie Ladeluftrohre für Turbolader im Kfz-Bereich sind.

25. Extrusionsblasgeformte Luftführungsteile gemäß Anspruch 23 und 24, **dadurch gekennzeichnet, dass** die Formteile aus der Formmasse und einer weiteren Formmasse gemäß Anspruch 5 besteht, deren Zugelastizitätsmodule sich mindestens um einen Faktor 1,2 unterscheiden und die Formmassen als Komponenten Polyamid enthalten.

26. Extrusionsblasgeformte Luftführungsteile gemäß Ansprüchen 23 bis 25, **dadurch gekennzeichnet, dass** das Luftführungsteil über seine gesamte Länge eine alternierende Zusammensetzung mit Segmenten aus jeweils einer der Formmassen aufweist, so dass ein Luftführungsteil aus sequenziellen Hart- und Weichsegmenten oder mit unterschiedlichem Schichtdickenverhältnis erhalten wird.

27. Extrusionsblasformteil gemäß den vorhergehenden Ansprüchen 23 bis 26, **dadurch gekennzeichnet, dass** das Extrusionsblasformteil mindestens eine Polymerschicht aufweist und voneinander in Rohrachsenrichtung beabstandete, geschlossene, geometrische Außenstrukturen, die in mindestens einem radialen Winkelbereich in axialer Längsrichtung hintereinander eine Wellung auf dem Rohrmantel definieren, aufweist, wobei die geschlossenen, geometrischen Außenkonturen so gebildet sind, dass zwei einander ungefähr gegenüberliegende Bereiche der Rohrmantelfläche frei von Wellungen sind und diese Bereiche sich in Längsrichtung erstrecken, wobei die die Wellungen bildenden Außenkonturen im radialen Schnitt die Form von Ellipsen, Ovalen oder Langlöchern aufweisen.

28. Formteil gemäß irgend einem der vorhergehenden Ansprüche 23 bis 26, **dadurch gekennzeichnet, dass** es wenigstens teilweise gewellte Bereiche aufweist.

29. Formteil gemäß den vorhergehenden Ansprüchen 23 bis 28, herstellbar durch Extrusionsblasformen, Coextrusionsblasformen oder sequenziellem Blasformen mit oder ohne 3D-Blasformverfahren.
